# FASCICULE DE BREVET EUROPEEN

(11) **EP 0 648 969 B1**
(45) Date de publication et mention de la délivrance du brevet: **16.07.1997**
(21) Numéro de dépôt: 94402300.1
(22) Date de dépôt: 13.10.1994
(51) Int. Cl.: F21Q 1/00

(54) **Feu de signalisation à plusieurs sources de faible puissance et à moyens perfectionnés de traitement optique**
Anzeigeleuchte mit einer Mehrzahl von Lichtquellen niedriger Leistung und mit verbesserter Optik
Lamp for signalling employing a plurality of low-power light sources and improved optical means

(30) Priorité: 14.10.1993 FR 9312213
(43) Date de publication de la demande: 19.04.1995
(73) Titulaire: VALEO VISION, 93000 Bobigny (FR)
(72) Inventeur: Andrieu, Michel, F-81660 Pont de l'Arn (FR); Garric, Michel, F-81290 Labruguiere (FR)
(74) Mandataire: Martin, Jean-Jacques

(56) Documents cités:
- DE-A- 4 003 569
- US-A- 4 733 335

## Description

La présente invention concerne d'une façon générale les feux de signalisation pour véhicules automobiles, et plus particulièrement un feu de signalisation comportant, pour une même fonction lumineuse, une série de sources lumineuses de faible puissance telles que des diodes électroluminescentes.

La présente invention vise à proposer un feu de ce type utilisable notamment comme feu stop surélevé destiné à être placé à l'intérieur de l'habitacle du véhicule au voisinage de sa lunette arrière, ou encore à l'extérieur de l'habitacle, par exemple en association avec un aileron ou analogue.

Classiquement, pour obtenir la photométrie souhaitée, il est nécessaire de prévoir au droit de chacune des sources des doubles moyens optiques, permettant d'une part d'assurer la concentration de la lumière émise par la source au voisinage d'une direction privilégiée, et d'autre part d'assurer une diffusion du faisceau pour couvrir l'angle solide d'éclairement requis.

Cette exigence amène à prévoir, en plus du voyant de fermeture du feu, une plaque intermédiaire de traitement optique qui réalisera tout ou partie des deux fonctions optiques précitées.

Pour éviter l'accumulation de poussières ou de salissures sur les éléments optiques assurant ces fonctions, il est par ailleurs nécessaire qu'elles soient abritées vis-à-vis de l'extérieur, et ceci est réalisé généralement en prévoyant au niveau de l'assemblage de la glace et de la plaque intermédiaire avec un support ou socle du feu, des dispositions d'étanchéité particulières.

Cette solution est cependant coûteuse et complique la structure et le montage du feu.

On connaît par ailleurs par US-A-4,733,335 un feu de signalisation selon le préambule de la revendication 1. Ce feu connu présente toutefois l'inconvénient selon lequel la double plaque d'optique doit être mise en place par une opération fastidieuse de collage.

La présente invention vise à pallier l'ensemble des inconvénients de la technique antérieure et à proposer un feu de signalisation du type précité, dans lequel les moyens de traitement optique soient extrêmement simples et économiques à réaliser, ainsi qu'à monter dans le feu.

Ainsi la présente invention concerne un feu de signalisation tel que défini dans la revendication 1.

Des aspects préférés, mais non limitatifs de ce feu de signalisation sont définis dans les sous-revendications.

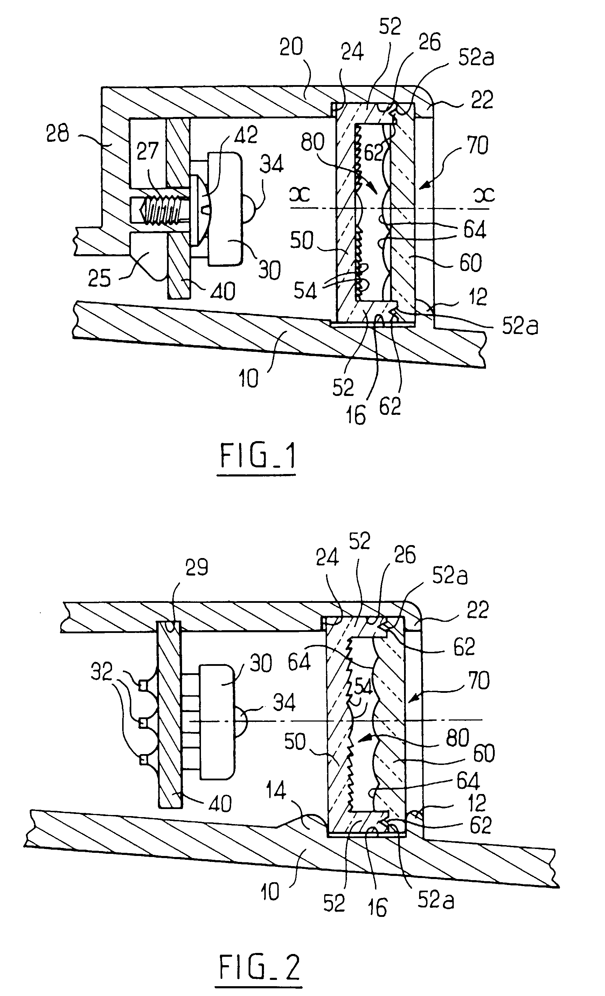

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel les figures 1 et 2 sont deux vues en coupe verticale axiale, dans deux plans différents, d'un feu de signalisation selon l'invention.

On notera préliminairement que, dans toute la description qui suit, les termes "avant", "arrière" et analogues seront compris par rapport à la direction d'émission de la lumière, c'est-à-dire vers la droite sur les deux figures.

En référence au dessin, on a représenté un feu de signalisation, en l'espèce un feu stop surélevé destiné à être fixé dans l'habitacle d'un véhicule automobile au voisinage de sa lunette arrière.

Ce feu comprend une semelle de fixation 10, en forme de plaque, qui comporte à sa surface supérieure une nervure 12 s'étendant sur toute la largeur du feu. A une certaine distance en arrière de la nervure 12, la semelle 10 comporte en saillie vers le haut une pluralité de bossages 14, qui définissent avec la nervure 12 des moyens de calage en direction longitudinale d'une autre partie du feu, apte à venir se loger dans un léger renfoncement 16 à fond horizontal également formé dans la semelle.

Le feu comprend en outre un capot 20 apte à être fixé sur la semelle 10 par des moyens appropriés, notamment par encliquetage, collage ou vissage, d'une manière non illustrée.

Ce capot 20 comporte, à l'aplomb de la nervure 12, un rebord descendant 22. Ce rebord et la nervure définissent, conjointement avec des parois latérales du feu formées sur la semelle et/ou le capot, une fenêtre de sortie de lumière 70, par exemple de forme rectangulaire allongée.

Entre le rebord 22 et un épaulement 24 formé à la surface inférieure du capot 20 est défini un renfoncement 26 dont le fond est parallèle au fond du renfoncement 16 de la semelle.

Le capot 20 se prolonge vers l'arrière et comporte une paroi descendante 28 à partir de laquelle fond saillie vers l'avant des fûts 27 orientés horizontalement, dans lesquels des vis autotaraudeuses peuvent être vissées.

Dans une variante non illustrée, on peut prévoir des pions de sertissage en saillie à partir du capot 20 et destinés à un sertissage à froid ou à chaud.

Une pluralité de sources lumineuses de faible puissance, en l'espèce des diodes électroluminescentes 30 de type "Brewster", sont montées par leurs pattes 32 sur un circuit imprimé commun 40. Les diodes 30 sont disposées en une rangée horizontale unique. Leur fenêtre hémisphérique de sortie de lumière est désignée en 34.

Le circuit imprimé 40, orienté verticalement, est fixé sur le capot 20 à l'aide de vis 42 traversant des trous du circuit imprimé et vissées dans les fûts 27 du capot. Le calage du circuit imprimé 40 dans la direction d'avant en arrière est par ailleurs assuré par engagement du bord supérieur du circuit imprimé dans une nervure de même largeur 29 formée dans la surface inférieure du capot 20.

Par ailleurs, la paroi descendante 28 du capot 20 comporte, en saillie vers l'avant, des nervures 25 contre le bord libre desquels le circuit imprimé 40 vient en appui lors du serrage des vis 42, pour assurer également le calage du circuit imprimé.

Chaque diode électroluminescente 34 émet de la lumière dans un cônes d'axe noté x-x.

Des moyens de traitement optique de la lumière émise par les diodes pour former des faisceaux relativement concentrés suivant les axes x-x comprennent des première et deuxième plaques d'optique, respectivement 50, 60, communes à l'ensemble des sources 30.

La plaque 50, intérieure, présente une section en forme générale de U, avec deux rebords supérieur et inférieur 52 dirigés vers l'avant. Des rebords latéraux, non visibles sont également prévus.

A l'avant des rebords 52 de la plaque 50 sont formées des petites rainures 52a de section en "V".

Entre ses rebords 52, la plaque 50 comporte des aménagements optiques de concentration de la lumière constitués en l'espèce par des échelons de Fresnel 54. Ces échelons sont disposés sur la face de la plaque 50 tournée vers l'avant.

La deuxième plaque 60, extérieure et définissant un voyant externe du feu, comporte une nervure périphérique 62, complémentaire de la rainure 52a, tournée vers ladite rainure.

La deuxième plaque 60 est lisse sur sa surface extérieure et comporte sur sa surface intérieure des billes sphériques ou toriques 64.

Les deux plaques 50, 60 sont fixées l'une à l'autre de façon étanche au moins vis-à-vis des poussières, de préférence par soudage aux ultrasons ou par vibrations au niveau du plan de contact entre le rebord 52 et la périphérie de la plaque 60. De cette manière, elles définissent ensemble une cavité centrale 80 entièrement fermée dans laquelle sont situés tous les aménagements optiques 54, 64. Ceux-ci sont donc parfaitement abrités vis-à-vis de l'extérieur, et restent propres en permanence, leur rendement étant ainsi conservé dans le temps.

On notera ici que la rainure 52a et la nervure complémentaire 62 permettent d'assurer un alignement correct des plaques 50, 60 au cours du soudage.

Comme on l'observe sur les figures, les plaques 50 et 60 une fois soudées définissent un corps de section transversale rectangulaire. Ce corps, lors de l'assemblage de la semelle 10 et du capot 20, est calé en bas par le léger renfoncement 16, les bossages 14 et la nervure 12, et en haut par le renfoncement plus profond 26.

On notera qu'un tel calage évite le recours à des moyens de fixation spécifiques des plaques 50, 60 dans l'espace intérieur du feu.

La plaque extérieure 60 débouche dans la fenêtre de sortie de lumière 70.

Enfin on notera que la semelle 20 porte de préférence dans sa région postérieure un connecteur (non représenté) relié par des conducteurs souples au circuit imprimé 40 pour l'alimentation électrique des diodes électroluminescentes 30.

Ainsi on réalise, d'une manière extrêmement simple et économique, un feu de signalisation comprenant des doubles aménagements optiques non exposés aux salissures.

## Revendications

1. Feu de signalisation, notamment feu surélevé pour lunette arrière de véhicule automobile, du type comprenant un boîtier (10, 20), une série de sources lumineuses (30) de faible puissance montées dans le boîtier et des aménagements (54, 64) de traitement optique de la lumière émise par les sources, les aménagements optiques étant prévus sur deux faces en vis-à-vis de deux plaques d'optique (50, 60) essentiellement parallèles et liées l'une à l'autre de façon étanche au moins vis-à-vis des poussières par un rebord périphérique (52) optiquement inactif, et lesdites plaques définissant entre elles une cavité fermée (80) dans laquelle les aménagements optiques (54, 64) sont protégés vis-à-vis de l'extérieur, caractérisé en ce que :
- le boîtier comporte des aménagements (12, 14, 16, 22, 24, 26) de montage par emboitement des deux plaques liées en avant desdites sources,
- le boîtier est réalisé en deux parties (10, 20) comportant respectivement des renfoncements (16, 26) pour deux bords opposés associés de l'ensemble constitué des deux plaques d'optique liées (50, 60), le rapprochement desdites deux parties étant suffisant pour assurer par calage le maintien en place dudit ensemble,
- lesdits renfoncements (16, 26) sont adjacents à une fenêtre de sortie de lumière (70) définie par le boîtier et sont délimités d'un côté par un rebord périphérique (12, 22) de ladite fenêtre, et
- la profondeur de pénétration de l'ensemble constitué par les deux plaques d'optique dans les renfoncements respectifs est telle que ledit rebord périphérique de la fenêtre masque ledit rebord périphérique optiquement inactif (52) dudit ensemble constitué par les deux plaques d'optique.

2. Feu selon la revendication 1, caractérisé en ce que les deux plaques d'optique sont soudées périphériquement l'une à l'autre.

3. Feu selon la revendication 2, caractérisé en ce que les deux plaques d'optique sont soudées par ultrasons ou par vibrations.

4. Feu selon la revendication 2 ou 3, caractérisé en ce que ledit rebord périphérique (52) est prévu sur l'une des plaques d'optique (50) et définit une face de soudage tournée vers la périphérie de l'autre plaque d'optique.

5. Feu selon la revendication 4, caractérisé en ce que ladite face de liaison comporte sur toute son étendue une rainure (52a) de profil en V et en ce que la périphérie de l'autre plaque d'optique comporte sur toute sa périphérie une nervure complémentaire (62).

6. Feu selon l'une des revendications 1 à 5, caractérisé en ce que les sources lumineuses (30) sont des diodes électroluminescentes.

7. Feu selon la revendication 6, caractérisé en ce que les diodes électroluminescentes (30) sont disposées selon une rangée unique et soudées sur un circuit imprimé commun (40).

8. Feu selon l'une des revendications 1 à 7, caractérisé en ce qu'une plaque d'optique intérieure (50) porte au droit de chaque source une pluralité d'aménagements (54) de concentration de flux lumineux et en ce qu'une plaque d'optique extérieure (60), formant voyant, porte au moins au droit de chaque source (30) une pluralité d'aménagements (64) de diffusion de flux lumineux.

## Patentansprüche

1. Anzeigeleuchte, insbesondere hochgesetzte Bremsleuchte für die Heckscheibe eines Kraftfahrzeugs, umfassend ein Gehäuse (10, 20), eine Reihe von Lichtquellen (30) niedriger Leistung, die in das Gehäuse eingebaut sind, und Anordnungen (54, 64) zur optischen Behandlung des von den Lichtquellen abgestrahten Lichts, wobei die optischen Anordnungen auf zwei gegenüberliegenden Flächen von zwei optischen Platten (50, 60) vorgesehen sind, die in etwa parallel verlaufen und zumindest staubdicht durch eine optisch inaktive Umfangsrandleiste (52) miteinander verbunden sind, und wobei die besagten Platten einen zwischen ihnen liegenden geschlossenen Hohlraum (80) bilden, in dem die optischen Anordnungen (54, 64) nach außen geschützt sind, **dadurch gekennzeichnet,** daß:
- das Gehäuse Anordnungen (12, 14, 16, 22, 24, 26) für den durch Einfügung erfolgenden Einbau der beiden verbundenen Platten vor den besagten Lichtquellen umfaßt,
- das Gehäuse aus zwei Teilen (10, 20) ausgeführt ist, die jeweils Einsenkungen (16, 26) für zwei zugehörige gegenüberliegende Kanten der Einheit aufweisen, die aus den beiden verbundenen optischen Platten (50, 60) besteht, wobei die Annäherung der beiden besagten Teile ausreichend ist, um die Positionssicherung der besagten Einheit durch Festklemmen zu bewirken,
- die besagten Einsenkungen (16, 26) an ein Lichtaustrittsfenster (70) angrenzen, das durch das Gehäuse gebildet wird, und auf einer Seite durch eine Umfangsrandleiste (12, 22) des besagten Fensters begrenzt werden, und
- die Eindringtiefe der durch die beiden optischen Platten gebildeten Einheit in den jeweiligen Einsenkungen so bemessen ist, daß die besagte Umfangsrandleiste des Fensters die besagte optisch inaktive Umfangsrandleiste (52) der besagten Einheit aus den beiden optischen Platten abdeckt.

2. Leuchte nach Anspruch 1 , **dadurch gekennzeichnet,** daß die beiden optischen Platten umfangsmäßig aneinandergeschweißt sind.

3. Leuchte nach Anspruch 2 , **dadurch gekennzeichnet**, daß die beiden optischen Platten durch Ultraschall- oder Vibrationschweißen verschweißt sind.

4. Leuchte nach Anspruch 2 oder 3, **dadurch gekennzeichnet,** daß die besagte Umfangsrandleiste (52) an einer der optischen Platten (50) vorgesehen ist und eine zum Umfang der anderen optischen Platte gerichtete Schweißfläche bildet.

5. Leuchte nach Anspruch 4 , **dadurch gekennzeichnet**, daß die besagte Verbindungsfläche auf ihrer gesamten Ausdehnung eine Nut (52a) mit V-förmigem Profil enthält und daß der Umfang der anderen optischen Platte auf seinem gesamten Umfang eine formschlüssige Rippe (62) aufweist.

6. Leuchte nach einem der Ansprüche 1 bis 5 , **dadurch gekennzeichnet**, daß die Lichtquellen (30) Leuchtdioden sind.

7. Leuchte nach Anspruch 6 , **dadurch gekennzeichnet,** daß die Leuchtdioden (30) in einer einzigen Reihe angeordnet und auf einer gemeinsamen gedruckten Schaltung (40) aufgelötet sind.

8. Leuchte nach einem der Ansprüche 1 bis 7 , **dadurch gekennzeichnet,** daß eine innere optische Platte (50) in Höhe jeder Lichtquelle eine Mehrzahl von Anordnungen (54) zur Bündelung des Lichtstroms trägt und daß eine äußere optische Platte (60), die eine Abdeckscheibe bildet, zumindest in Höhe jeder Lichtquelle (30) eine Mehrzahl von Anordnungen (64) zur Streuung des Lichtstroms trägt.

## Claims

1. A signal lamp, in particular a high mounted lamp for the rear window of a motor vehicle, of the type comprising a casing (10, 20), a series of low power light sources (30) mounted in the casing and arrangements (54, 64) for optical treatment of the light emitted by the sources, the optical arrangements being provided on two facing surfaces of two substantially parallel optical plates (50, 60) connected together in a sealed manner, at least with respect to powders, by an optically inert peripheral shoulder flange (52) and the said plates defining between them a closed cavity (80) in which the optical arrangements (54, 64) are protected with respect to the outside, characterized in that:
- the casing comprises arrangements (12, 14, 16, 22, 24, 26) for mounting the two connected plates by nested fitting in front of the said sources,
- the casing is made in two parts (10, 20) respectively comprising recesses (16, 26) for two opposite associated edges of the assembly constituted by the two joined optical plates (50, 60), the action of bringing together said two parts being sufficient to ensure the holding in place of the said assembly by wedging,
- the said recesses (16, 26) are adjacent to an outlet window for the light (70) defined by the casing and are delimited at one side by a peripheral shoulder flange (12, 22) of the said window, and
- the depth of insertion of the two optical plates in the respective recesses is such that the said peripheral shoulder flange of the window masks the said optically inert peripheral shoulder flange (52) of the said assembly constituted by the two optical plates.

2. A signal lamp in accordance with claim 1, characterized in that the two optical plates are peripherally welded to one another.

3. A signal lamp in accordance with claim 2, characterized in that the two optical plates are welded ultrasonically or by vibrations.

4. A signal lamp in accordance with claim 2 or 3, characterized in that the said peripheral shoulder flange (52) is provided on one of the said optical plates (50) and defines a welding face turned towards the periphery of the other optical plate.

5. A signal lamp according to claim 4, characterized in that the said joining face comprises a V-shaped groove (52a) over its whole extent and in that the periphery of the other optical plate comprises a complementary rib (62) over its entire periphery.

6. A signal lamp according to any one of claims 1 to 5, characterized in that the light sources (30) are electroluminescent diodes.

7. A signal lamp according to claim 6, characterized in that the electroluminescent diodes (30) are arranged in a single line and are soldered to a common printed circuit (40).

8. A signal lamp according to any one of claims 1 to 7, characterized in that an inner optical plate (50) comprises at right angles to each source a plurality of devices (54) for concentration of luminous flux and in that an outer optical plate (60), forming the indicator, comprises at least at right angles to each source (30) a plurality of devices (64) for diffusion of luminous flux.
